# EUROPEAN PATENT APPLICATION

(11) **EP 3 290 686 A1**
(43) Date of publication of application: **07.03.2018**
(21) Application number: 16190095.6
(22) Date of filing: 22.09.2016
(51) Int. Cl.: F02N 11/08, F02N 11/10, F02N 11/12

(54) **VEHICLE SKED START**

(30) Priority: 31.08.2016 US 201615252359
(71) Applicant: Bergmann, Wanda S., Marathon, MI 54448 (US)
(72) Inventor: Bergmann, Wanda S., Marathon, MI 54448 (US)
(74) Representative: Romano, Giuseppe

(57) **Abstract**

A control unit disposed on a vehicle for use in a system for monitoring, configuring, programming and/or diagnosing operation on at least one vehicle system. The control unit comprising a user interface and a network interface to support communication between the control unit and at least one remote device, to perform various functions such as remote start, remote schedule start, vehicle health diagnostics, and tracking on the vehicle remotely.

## Description

### FIELD

Example embodiments of the inventive concepts generally relate to auto-starting a vehicle, performing a vehicle diagnostics, repair and emergency services.

### BACKGROUND

Today, car manufacturers are adding computers with entertainment, communication, and automobile health tracking information to automobiles. Additionally, there are many aftermarket products that are meant to assist a customer to monitor and diagnose their cars by allowing them access to the information through a web portal or application on their smartphone device. Most of these products require internet connectivity through another device, such as a smartphone. There are many smartphone applications, such as mapping software, that allow a user to navigate to a destination. The mapping applications may be viewable on the built in electronic screen in the car but the applications and services are not integrated with the car's computer.

However, engine/vehicle owners seek to provide conveniences or amenities for the operators or drivers because it is often difficult to attract and retain drivers in a competitive job market. For these applications, automatic start/stop features may be used to balance the fuel economy interests of the owner while providing conveniences to the operator, such as automatically starting and stopping the engine while the driver is parked to keep the cab temperature comfortable. Likewise, various vehicle parameters, such as battery voltage, fuel temperature, or oil temperature may be used to automatically start and stop the engine to avoid difficult starting in cold weather applications.

Some examples of the systems are illustrated below with reference to pertinent documents.

US Patent Application No. 20140200742 entitled "Auto starting a vehicle based on user criteria" which discloses a method of remotely performing a vehicle auto start function when starting a vehicle engine. A vehicle may be associated with a handheld communication device (HCD) using a vehicle mobile application (e.g., on the HCD). Using the application, a configuration of at least one vehicle function and auto start criteria may be received. The auto-start criteria may define a geographic area. It may be determined that the vehicle and the HCD are located within the geographic area at a time when it is desirable to auto start the vehicle.

Another US Patent Application No. 20130151132 entitled "Remote starter" which discloses a remote starter that is installed in a vehicle for executing starting control of a driving apparatus of the vehicle, and that executes the starting control of the driving apparatus in response to a request for starting received from an information processor that is located outside the vehicle, the remote starter comprising: a communicator that communicates with the information processor by transmitting and receiving information; and a controller that obtains time information at a time of starting the driving apparatus.

### SUMMARY

The present disclosure overcomes the deficiencies of the prior art and provides an improved vehicle control system and method which may be used to automatically start an engine on the predefined day/date and time provided by a user. As such, the general purpose of the present disclosure, which will be described subsequently in greater detail, is to provide a new and improved method for monitoring, configuring, programming and/or diagnosing operation of at least one vehicle module via a remote device.

One aspect of the inventive concept can be embodied in an improved vehicle control system and method which may be used to automatically start an engine at the predefined day/date and time provided by a user. In carrying out this inventive aspect and other features of the present disclosure, a method for monitoring, configuring, programming and/or diagnosing operation of at least one vehicle module via a remote device is provided. The control unit is in communication with a starter motor of the internal combustion engine and a plurality of fuel injectors provided with the internal combustion engine. The control unit includes a programmable memory for storing instructions and a processor for executing the instruction for performing various functions for controlling the engine and other vehicle system. In one embodiment, the control unit is adapted to communicate with at least one remote device for sending and receiving instruction for performing various functions such as remote start, remote schedule start, vehicle health diagnostics, tracking and the like.

Other aspect of the inventive concept can be embodied in a method of remotely performing a vehicle function, the method comprising: establishing a radio communication channel between a remote device and a control unit of a vehicle; receiving, by the control unit, instructions from the remote device for performing various functions in the vehicle, the instruction including scheduling a remote vehicle function to be performed; and performing the remote vehicle function as scheduled.

Yet other aspect of the inventive concept can be embodied in a system for remotely controlling a vehicle, the system comprising: a remote device and control unit including a programmable memory for storing control instructions and a processor for executing the instruction for performing various functions for controlling the engine and vehicle systems, wherein the remote device and control unit communicate via an established radio communication channel, wherein the remote device is configured to send control instructions to the control unit for scheduling a remote vehicle function to be performed via an intermediate server; and control unit configured to, communicate with a starter motor of the internal combustion engine, receive instructions from the remote device for performing various functions in the vehicle, the instructions including scheduling a remote vehicle function to be performed at a future time, determine that the vehicle is in safe condition for performing the remote vehicle function, and perform the remote vehicle function as scheduled after determining that the vehicle is in safe condition, the remote vehicle function including starting and stopping the engine.

Yet other aspect of the inventive concept can be embodied in a method wherein the remote device is configured to send the control commands to perform the remote vehicle function via an intermediate server.

Yet other aspect of the inventive concept can be embodied in a method including determining that the vehicle is in safe condition before performing the remote vehicle function.

Yet other aspect of the inventive concept can be embodied in a method wherein determining the safe condition includes determining any driver seats or passenger seats occupancy in the vehicle before performing the remote vehicle function.

Other embodiment of the disclosure is directed to a control unit disposed in a vehicle for use in a system for monitoring, configuring, programming and/or diagnosing operation on at least one vehicle system, Furthermore, the control unit comprises a user interface and a network interface to support communication between the control unit and at least one remote device, to perform various for performing various functions such as remote start, remote schedule start, vehicle health diagnostics, tracking and the like on the vehicle remotely.

It is to be understood that the disclosure is not limited in its application to the details of construction and to the arrangements of the components set forth in the following description or illustrated in the drawings. The disclosure is capable of other embodiments and of being practiced and carried out in various ways. Also, it is to be understood that the phraseology and terminology employed herein are for the purpose of description and should not be regarded as limiting.

These together with other objects of the disclosure, along with the various features of novelty which characterize the disclosure, are pointed out with particularity in the disclosure. For a better understanding of the disclosure, its operating advantages and the inventive aspects attained by its uses, reference should be made to the accompanying drawings and descriptive matter in which there are illustrated embodiments of the disclosure.

### BRIEF DESCRIPTION OF THE DRAWINGS

The example embodiments of the inventive aspects will be better understood from the following description taken in conjunction with the accompanying drawings. The drawing FIGS. 1-3 represent non-limiting, example embodiments.
FIG. 1 illustrates a vehicle control unit 2 in which vehicle control functionality is integrated with a remote device in accordance with an example embodiment;
FIG. 2 illustrates a communication system that includes a vehicle that communicates with a remote device using a server in accordance with an example embodiment;
FIG. 3 illustrates a various components of the control unit 2 in accordance with an example embodiment.

### DETAILED DESCRIPTION

In the following detailed description, reference is made to the accompanying drawings which form a part hereof, and in which is shown by way of illustration specific embodiments in which the disclosure may be practiced. These embodiments are described in sufficient detail to enable those skilled in the art to practice the disclosure, and it is to be understood that the embodiments may be combined, or that other embodiments may be utilized and that structural and logical changes may be made without departing from the spirit and scope of the present disclosure. The following detailed description is, therefore, not to be taken in a limiting sense, and the scope of the present disclosure is defined by the claims and their equivalents.

Example embodiments of the inventive aspects may be embodied in many different forms and should not be construed as being limited to the embodiments set forth herein; rather, these embodiments are provided so that this disclosure will be thorough and complete, and will fully convey the concept of example embodiments to those of ordinary skill in the art. In the drawings, some dimensions are exaggerated for clarity.

It will be understood that when an element is referred to as being "connected" or "coupled" to another element, it can be directly connected or coupled to the other element or intervening elements may be present.

The terminology used herein is for the purpose of describing particular embodiments only and is not intended to be limiting of example embodiments of the inventive concepts. As used herein, the singular forms "a," "an" and "the" are intended to include the plural forms as well, unless the context clearly indicates otherwise. It will be further understood that the terms "comprises", "comprising", "includes" and/or "including," if used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments of the inventive concepts belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

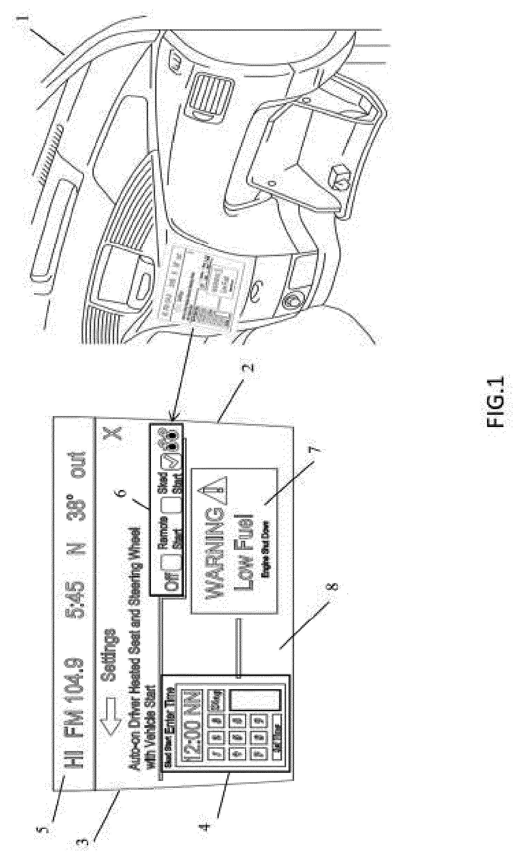

FIG. 1 shows an example operating environment comprising a Vehicle 1 depicted as a passenger car. But it should be appreciated that any other vehicle, including motorcycles, trucks, sports utility vehicles (SUVs), recreational vehicles (RVs), marine vessels, aircraft, etc., may also be used. The vehicle 1 includes a control unit 2, a microphone, one or more push buttons or touch screen inputs, an audio system, a visual display, user interface, software applications and a GPS module.

Further, the control unit 2 is a telematics unit or infotainment system that enables wireless voice and/or data communication via wireless communication so that the vehicle 1 can communicate with the remote device, other telematics-enabled vehicles, or some other entity or device. The control unit 2 uses radio transmissions to establish a communications channel (a voice channel and/or a data channel) so that voice and/or data transmissions can be sent and received over the channel. By providing both voice and data communication, telematics unit enables the vehicle to offer a number of different operations related to navigation, telephony, emergency assistance, diagnostics, infotainment, remote start, schedule start etc. The at least one wireless communication module 32 corresponds to the network protocols supported by the various remote devices.

Further, in one embodiment of the present disclosure, the control unit 2 includes at least one wireless communication module 32 can include, for example, but are not limited to, a telecommunications module, a long range wireless module, and a short range wireless module. The wireless communication transmits data to and receives data from remote devices (i.e., the cell phone) according to a telecommunications protocol (i.e., GSM, CDMA, 3G, HSPA+, 4G, LTE, etc.). The wireless communication module 32 transmits data to and receives data from the other long range remote devices, such as the computer, according to a long range wireless protocol (i.e., WiFi). The wireless communication module 32 transmit data to and receives data from close range remote devices, such as when the remote devices are within the vehicle 1, according to a short range protocol (i.e., Bluetooth, Zigbee and NFC and the like). In various embodiments, the wireless communications module further includes a satellite module. The satellite module receives data from the global positioning satellite system according to a satellite communications protocol.

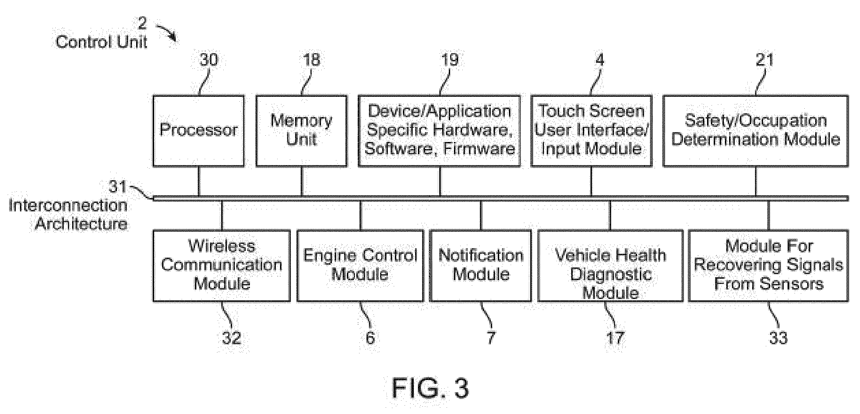

As shown in FIG. 3, the controller unit 2 includes, without limitation, at least one processor 30, a memory unit 18, device/application specific hardware, software, firmware, and/or applications 19, a user interface 4, safety/Occupancy Determination Module 21, a wireless communication module 32, Engine control module 6, Notification Module 7, Vehicle health Diagnostic Module 17, and Module for receiving sensor signal 33. In an implementation, the elements of the control unit 2 may be coupled together via a bus or any suitable interconnection architecture 31. The controller unit 2 may further include additional elements, components, modules, and functionality configured to support conventional functions as well as functions that might be related to the particular implementation and deployment of the controller unit 2.

In one embodiment of the present disclosure, the processor 30 can be a device capable of processing electronic instructions, including microprocessors, microcontrollers, host processors, controllers, vehicle communication processors, and application specific integrated circuits (ASICs). It can be a dedicated processor used only for control unit 2 or can be shared with other vehicle systems. Processor executes various types of digitally-stored instructions, such as software or firmware programs stored in memory, which enable the control unit 2 to provide a wide variety of services. For instance, processor executes programs or process data to carry out at least a part of the method discussed herein.

In one embodiment of the present disclosure, the memory unit may be physical devices that are used to store any data and instructions that may be accessed by the processor, such as program data and instructions for computer programs and an operating system. The memory unit may be an optical medium, a magnetic medium such as a floppy disk, a compact disc (CD), a digital video disk (DVD), and/or a solid-state medium such as RAM, ROM, and flash memory

Further, as shown in fig. 1, the control unit 2 disposed on the dashboard of the vehicle1 includes a touch screen 3 display for displaying a user interface 8 having various software application modules for performing various function. Further, the user interface 8 includes an engine control module 6, user input module 4, notification module 7, vehicle health diagnostic module, radio module 5. The user interface 8 of the control unit 2 allows a user to select at least one module to perform pre-defined function.

In one embodiment of the present disclosure, the engine control module 6 allows a user to automatically start the engine at predefined day/date and time. Further, the engine control module 6 is in communication with a starter motor of the internal combustion engine and a plurality of fuel injectors provided with the internal combustion engine. Further, the engine control module includes a remote start mode and a sked start mode. The engine control module allows a user to select the remote start mode, sked start mode or both, separately via the user interface 8. In case, the user selects the remote start mode, the engine control module 6 allows a user to start the engine remotely through a remote device 9 via wireless communication. Further, in case user select the sked start mode, the engine control module 6 allows a user to start the engine at predefined day/date and time by providing user input through the user input module 4 or from remote device 9 and stored in the memory unit. Further, at the sked start mode, the engine control module 6 is adapted determine a current day and/or date and time, after receiving predefined day/date and time from the user through the user input module 4 or from remote device 9. Thereafter, the engine control module 6 is adapted compare the current day and/or date and time to a day and/or date and time previously stored in the programmable memory for automatically starting the engine. After comparing, the engine control module 6 is adapted to control the starter motor and fuel injectors to automatically start the engine based on the previously stored day and/or date and time to a predefined time duration.

Further, the vehicle health diagnostic module includes a sensor module having a plurality of sensor attached to the plurality of vehicle systems such engine monitoring system, transmission monitoring system, tachometer, fuel mixture monitoring system, 02 monitoring system, electrical motor monitoring system, regenerative braking monitoring system, ABS monitoring system, stabilization monitoring system, shock absorber monitoring system, water temperature monitoring system, oil pressure monitoring system, battery monitoring system, climate control monitoring system, tire pressure monitoring system, security monitoring system, fuel level monitoring system, crash prevention monitoring system, sonar proximity monitoring system, torque monitoring system, hybrid power sharing monitoring system, battery monitoring system, lights monitoring system, fluid level monitoring system and passenger seat.

Further, the sensor module is adapted to send the status data of each vehicle system to the vehicle health diagnostic module. Further, vehicle health diagnostic module is adapted to store the status data of each vehicle system in the memory unit. Further, the vehicle health diagnostic module is adapted to perform the vehicle health diagnostics by comparing a predefined status data of each vehicle system and current status data of each vehicle system stored in the memory unit. Further, the vehicle health diagnostic module is adapted to notify via notification module to the user, if there is any change in any of the vehicle systems. Further, the vehicle health diagnostic module is adapted to create a vehicle health report based on the comparison of the predefined status data of each vehicle system and current status data of each vehicle system stored in the memory unit.

Further, the vehicle health diagnostic module is adapted to display vehicle health notification on the display screen of the control unit 2. The vehicle health notification notifications may include, but are not limited to: engine status notifications, transmission status notifications, RPM status notifications, fuel mixture status notifications, 02 status notifications, electrical motor status notifications, regenerative braking status notifications, ABS status notifications, stabilization status notifications, shock absorber status notifications, water temperature status notifications, oil pressure status notifications, battery status notifications, climate status notifications, climate control notifications, windshield wiper status notifications, speed notifications, cruise control status notifications, lighting status notifications, tire pressure status notifications, tire inflator status notifications, security status notifications, fuel level notifications, lighting notifications, crash prevention status notifications, sonar proximity notifications, audio/video notifications, navigation notifications, automatic breaking status notifications, torque status notifications, hybrid power sharing status notifications, electric vehicle notifications, trip notification and the like.

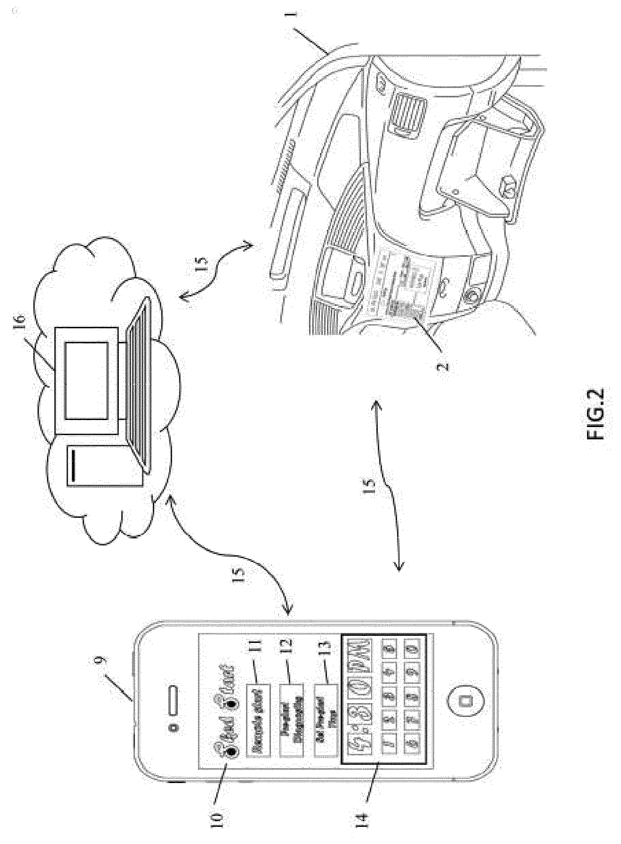

Now referring to Fig.2, the control unit 2 is adapted to communicate with mobile application 10 running on the remote device 9 via the server 16 through wireless communication 15. The mobile application 10 is adapted to control all aspects of the vehicle 1 functionality by communicating with the control unit 2, such as engine fuel to air mixture, timing, power curve, speed regulation, anti-lock brakes, stabilization systems, charging, temperature and the like as described above. Further, the mobile application 10 includes an engine control module, user input module, notification module, vehicle health diagnostic module, notification module and radio module provided in the user interface 8 as (shown in fig.1) of the control unit 2 is controlled by a remote device 9 over the wireless communication.

For example, the schedule or starting time of the engine can be transmitted using the mobile application 10 running the remote device 9. Further, the mobile application 10 includes a user interface having a remote start function 11, a vehicle health diagnostic function 12 and a schedule start function 13 and input function 14 as shown in fig. 2. Further, the remote start function 11 is adapted to allow a user to start the engine of the vehicle remotely by sending a start instruction to the control unit 2 via wireless communication 15, if the vehicle control unit 2 is at remote start mode. Further, the vehicle health diagnostic function 12 is adapted to retrieve the vehicle system status and able to display the vehicle health report to the user by accessing the control unit 2 via the server 16 through wireless communication 15. Furthermore, the schedule start function 13 is adapted to allow a user to automatically start the engine at predefined day/date and time by sending a predefined day/date and time to the control unit 2 of the vehicle via the remote device 9 through the server 16, to start the engine on the predefined day/date and time.

In an example embodiment, the mobile device exchanges control commands with the control unit via an intermediate server. Server 16 may function as an intermediate server and may be coupled to a wireless communication unit of its own. In an implementation, wireless communication module of the vehicle communicates with a satellite which then established a connection to the wireless communication unit and the intermediate server. Such wireless communication unit may be associated with the wireless providers' communication system. Exchanging control commands via the intermediate server allows the mobile device to communicate with the vehicle from a location where the mobile device may not be able to communicate with the vehicle via direct wireless signal.

In an example embodiment, control unit 2 includes a processor and a memory, wherein the memory comprises computer-readable-medium having computer-executable instructions stored therein that, when executed by the processor, cause the processor to: receive instructions from the remote device for performing various functions in the vehicle, the instruction including receiving signal data from the sensors installed at the various location of the vehicle, scheduling a remote vehicle function to be performed; and performing the remote vehicle function as scheduled.

In one embodiment of the present disclosure, the remote devices 9 can be configured to include, for example, a processor, a storage medium, one or more input and/or output (I/O) devices (or peripherals), a display (touch screen), and a network interface. The remote devices communicate with the control unit 2 of the vehicle 1 via the network interface and using a network protocol that is applicable to the remote device. Further, the remote device is selected from a group of a cellular telephone/Smartphone, tablet, laptop, desktop computer, PDA and the like.

In one embodiment of the present disclosure, the remote device 6 can be configured to include one or more mobile application 10 which adapted to communicate with the control unit 2 of the vehicle 1. A mobile application 10 includes one or more software instructions that, when executed by the processor. In various embodiments, the mobile application 10 can be stored in the storage medium of the remote device, can be downloaded from a remote storage device (i.e. a central server) (not shown), and/or can be accessed from a remote location (i.e. a client-server application).

In one embodiment of the present disclosure, the mobile application 10 running on the remote device 9 is adapted to preform various function on the vehicle 1 by accessing the control unit 2 via the server 16 through wireless communication 15, is as follow: schedule engine to start at a future time, starting and shutting off the engine, check and notify the fuel level, see the tire pressure, control the cabin temperature, lock and unlock the car, control the flash lights and honk horn, check battery level, check trip/gas tank odometer to allow for fuel usage monitoring and provide alert if vehicle is using too much fuel, check average distance traveled, check average speed, notify the next oil change is due date, check and notify windshield washer fluid level, check and notify brake fluid level, onboard vehicle health diagnostics, check trip logging (from engine on to engine off), provide geophone alert (for vehicles equipped with GPS or other vehicle locating device) if vehicle go outside a prescribed area, GPS tracking, recording activity and performance of the car, such as: average gas mileage, location.

In some example embodiment, the before executing the remote control function, the control unit may perform a test to determine that the vehicle is in safe condition to perform the remote control function. Such test includes determining any driver seat or passenger seat occupancy in the vehicle. Such occupancy includes collecting signal from sensors such as a MEMS (microelectromechanical system) accelerometer installed on the seat. Based on the MEMS accelerometer sensed signal, the controller determines whether a passenger is occupying any the vehicle seats. After determing that the vehicle is not occupied, the controller performs the scheduled function.

In yet another example embodiment, the controller determines that the vehicle is in locked condition before performing the scheduled function. In yet another example embodiment, the controller determines that the vehicle is not occupied as well as in locked condition before performing the remote scheduled function.

It is to be understood that the above description is intended to be illustrative, and not restrictive. For example, the above-discussed embodiments may be used in combination with each other. Many other embodiments will be apparent to those of skill in the art upon reviewing the above description.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While the present disclosure has been described with reference to particular embodiments, it should be understood that the embodiments are illustrative and that the scope of the disclosure is not limited to these embodiments. Many variations, modifications, additions and improvements to the embodiments described above are possible. It is contemplated that these variations, modifications, additions and improvements fall within the scope of the disclosure.

## Claims

1. A method of remotely performing a vehicle function, the method comprising:
establishing a radio communication channel between a remote device and a control unit of a vehicle;
receiving, by the control unit, instructions from the remote device for performing various functions in the vehicle, the instruction including scheduling a remote vehicle function to be performed;
performing the remote vehicle function as scheduled.

2. The method of claim 1, wherein the remote device is further configured to send control commands to perform the remote vehicle function via an intermediate server.

3. The method of claim 2, further including determining that the vehicle is in safe condition before performing the remote vehicle function.

4. The method of claim 3, wherein determining the safe condition includes determining any driver seat or passenger seat occupancy in the vehicle before performing the remote vehicle function.

5. The method of claim 4, wherein performing remote vehicle function includes performing start and stop of the vehicle as scheduled.

6. The method of claim 1, the remote vehicle functions include at least one of vehicle health diagnostics and tracking.

7. The method of claim 1, wherein the remote device is further configured to exchange control commands with the control unit via at least one of voice communication and touch input.

8. The method of claim 1, wherein performing the remote vehicle function includes exchanging control commands between the remote device and the control unit to check fuel level and notifying the fuel level to the remote device.

9. The method of claim 1, wherein performing the remote vehicle function includes exchanging control commands between the remote device and the control unit to check tire level and notifying pressure level to the remote device.

10. The method of claim 1, wherein performing the remote vehicle function includes exchanging control commands between the remote device and the control unit to check battery condition and notifying the condition to the remote device.

11. The method of claim 1, wherein performing the remote vehicle function includes exchanging control commands between the remote device and the control unit to check an odometer and notifying an odometer value to the remote device.

12. The method of claim 1, wherein performing the remote vehicle function includes exchanging control commands between the remote device and the control unit to perform at least one of checking and notifying oil change due date, windshield washer fluid level, and tire pressure, horn honk condition, battery capacity, odometer value, windshield washer fluid level, and brake fluid level.

13. The method of claim 1, wherein performing the remote vehicle function includes alerting a user if at least one of fuel level, tire pressure, battery level, windshield washer fluid level, and brake fluid level is below a threshold level.

14. The method of claim 2, wherein performing the remote vehicle function include sending commands from the remote device to start and stop the vehicle as scheduled.

15. The method of claim 2, wherein the control unit is configured to communicate with remote device via a network server.

16. The method of claim 2, wherein the remote vehicle function is performed without any condition with respect to a relative distance between the remote device and vehicle.

17. A system for remotely controlling a vehicle, the system comprising:
a remote device and control unit including a programmable memory for storing control instructions and a processor for executing the instruction for performing various functions for controlling an engine and vehicle systems and wherein the remote device and control unit communicate via an established radio communication channel, wherein
the remote device is configured to send control instructions to the control unit for scheduling a remote vehicle function to be performed via an intermediate server; and
the control unit is configured to,
communicate with a starter motor of an internal combustion engine,
receive instructions from the remote device for performing various functions in the vehicle, the instructions including scheduling a remote vehicle function to be performed at a future time,
determine that the vehicle is in safe condition for performing the remote vehicle function, and
perform the remote vehicle function as scheduled after determining that the vehicle is in safe condition, the remote vehicle function including starting and stopping the engine.

18. The system of claim 17, further comprises a Global Positioning System (GPS) module configured to communicate position data to the remote device.

19. The system of claim 17, further comprising a sensor configured to monitor at least one of Oxygen (02) level, water temperature level, oil pressure level, tire pressure level, fuel level and fluid level.

20. The system of claim 17, further comprising a sensor configured to monitor at least one of engine, transmission, tachometer, fuel mixture, electrical motor, regenerative braking, ABS, shock absorber, battery, climate control, security, crash prevention, sonar proximity, hybrid power, lights and occupancy.
